# FASCICULE DE BREVET EUROPEEN

(11) **EP 0 333 172 B1**
(45) Date de publication et mention de la délivrance du brevet: **28.07.1993**
(21) Numéro de dépôt: 89104609.6
(22) Date de dépôt: 15.03.1989
(51) Int. Cl.: H04M 11/00, H04M 11/08

(54) **Agencement de télécontrôle par voie téléphonique pour installation mono ou multifonction**
Fernüberwachungsanordnung auf einem Fernsprechkanal für Einzel- oder Mehrzweck-Analogen
Remote control arrangement in a telephonic path for a mono or multifunctional installation

(30) Priorité: 16.03.1988 FR 8803387
(43) Date de publication de la demande: 20.09.1989
(73) Titulaire: ALCATEL BUSINESS SYSTEMS, F-75008 Paris (FR)
(72) Inventeur: Defay, Christian, F-67000 Strasbourg (FR); Guyot, Gilbert, F-67190 Mutzig (FR)
(74) Mandataire: Weinmiller, Jürgen

(56) Documents cités:
- MESURES-REGULATION AUTOMATISME CONTROLE, vol. 51, no. 3, mars 1986, pages 69,71,72, Paris, FR; J.P. VERNAY: "Pour la télé-surveillance: utilisez les PTT"
- ELECTRONIQUE APPLICATIONS, no. 50, octobre-novembre 1986, pages 61-67, Paris, FR; P. GUEULLE: "Microprocesseur spécialisé et kit d'évaluation pour applications Minitel"
- INTERNATIONAL SWITCHING SYMPOSIUM 1987, "Innovations in Switching Technology", Phoenix, Arizona, 15-20 mars 1987, pages 429 A6.1.1 - 434 A6.1.6, IEEE, New York, US; M. FOURNIER et al.: "French videotex experience"

## Description

L'invention a pour objet un agencement de télécontrôle par voie téléphonique pour installation mono ou multifonction de taille modérée, par exemple pour une habitation ou une boutique et leurs éventuelles dépendances, pour un atelier ou un petit établissement.

L'évolution des réseaux téléphoniques permettant de transmettre aisément à la fois des signaux de parole et des signaux de données, pousse les utilisateurs à vouloir profiter des possibilités de mise en communication, sans contrainte géographique, entre terminaux téléphoniques reliés à un même réseau pour assurer des opérations de télécontrôle d'installations par voie téléphonique.

Le télécontrôle parfois appelé téléaction doit être considéré ici comme recouvrant un ensemble d'applications diverses impliquant des transmissions mono ou bidirectionnelles, classiquement de courts messages produits le plus souvent de manière sporadique.

Cet ensemble comprend notamment les applications de télécommande, de télégestion ou de télésurveillance.

Il est connu de télécommander un appareillage d'une installation telle qu'évoquée plus haut, au travers d'un réseau téléphonique commuté et à partir d'un émetteur spécialisé que l'on raccorde au réseau téléphonique, par l'intermédiaire d'un classique poste téléphonique ou directement comme un tel poste. Cet émetteur est apte à produire une signalisation particulière de télécommande usuellement différente des signalisations exploitées pour le fonctionnement du réseau téléphonique. La signalisation particulière est captée par un récepteur spécialisé qui est chargé de commander en conséquence l'appareillage et qui est relié à cet effet au réseau téléphonique d'une manière comparable à l'émetteur. La transmission d'une signalisation particulière de télécommande nécessite bien entendu l'établissement d'une liaison téléphonique entre émetteur et récepteur spécialisés au travers du réseau téléphonique selon la procédure en vigueur dans ce dernier. Des possibilités de transmission bidirectionnelles sont souvent prévues.

Les agencements de télécommande de ce type sont généralement coûteux en particulier parce qu'ils font appel à des équipements spécifiques souvent associés à une fonction unique bien déterminée.

Il est également connu par un article intitulé "Pour la télé surveillance: utilisez les PTT" publié par J.P. VERNAY en mars 1986 dans le numéro 3 du volume 51 pages 69 á 72 de la revue "Mesures Régulation Automatisme Contrôle" publié à Paris , France, un système de télécontrôle dans lequel un premier sous-ensemble permet la commande d'une installation technique. Un sous-ensemble de supervision est relié par voie téléphonique au premier sous-ensemble, l'un et l'autre sont reliés à un terminal vidéotex, par voie téléphonique si celui-ci est distant, de manière à profiter des possibilités de dialogue qu'offre ce type de terminal.

L'invention propose un agencement de télécontrôle par voie téléphonique pour au moins un appareillage d'une installation, mono ou multifonction, qui limite au maximum l'emploi d'équipements spécifiques, tels que les sous-ensembles évoqués ci-dessus, en profitant des possibilités offertes par les terminaux téléphoniques standards, de manière à être peu coûteux.

L'agencement est classiquement doté d'un équipement qui est organisé autour d'une logique de commande à microprocesseur pour la commande du ou des appareillages, le télécontrôle s'effectuant entre ledit équipement et un dispositif télématique distant par l'intermédiaire de lignes d'un réseau téléphonique, après établissement d'une communication téléphonique depuis l'équipement ou du dispositif.

Selon une caractéristique de l'invention, l'agencement comporte localement, au niveau de l'installation,un équipement de type répartiteur domotique, relié à la ligne téléphonique, qui le dessert dans l'installation, par l'intermédiaire d'un terminal d'annuaire, du type connu a détecteur et numéroteur automatiques d'appel téléphonique, pour ses mises en communication téléphonique avec un dispositif télématique, compatible, par l'intermédiaire du réseau téléphonique.

L'invention, ses caractéristiques et ses avantages sont précisés dans la description qui suit, en liaison avec les figures répertoriées ci-dessous.

La figure 1 présente un schéma d'un agencement de télécontrôle selon l'invention.

La figure 2 présente un schéma de principe du dispositif local d'un agencement de télécontrôle selon l'invention.

La figure 3 présente un exemple de réalisation des modules d'interface d'un dispositif local.

La figure 4 présente un exemple de réalisation des modules de transmission pour dispositif local d'agencement de télécontrôle selon l'invention.

La figure 5 présente un schéma de principe d'un agencement de télécontrôle à dispositifs locaux chaînés.

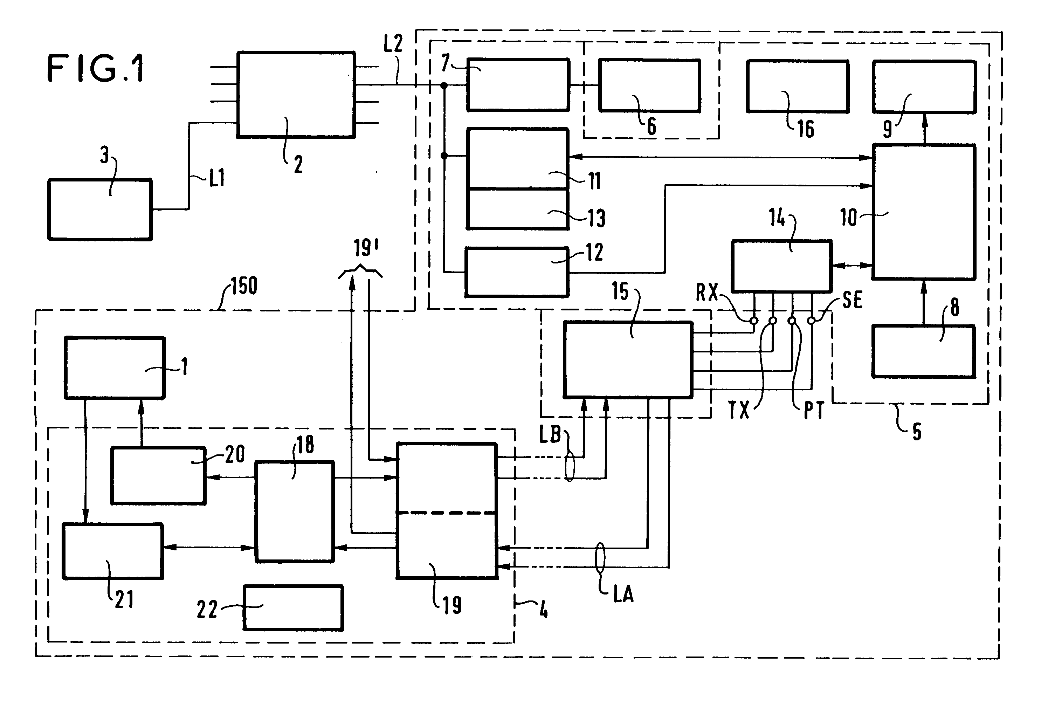

L'agencement de télécontrôle présenté figure 1 est destiné à permettre le télécontrôle individuel d'au moins une installation distante 1 au travers d'un réseau téléphonique 2, à partir d'au moins un dispositif télématique 3 apte à échanger des informations avec au moins cette installation distante 1 par voie téléphonique après établissement d'un chemin de communication au travers du réseau téléphonique.

Comme indiqué plus haut le télécontrôle est susceptible de concerner des applications très diverses dans le cadre d' installations 1 très diverses, il doit permettre d'assurer des transmissions d'informations de manière mono ou bidirectionnelle, à l'initiative du dispositif télématique 3 et/ou de l'installation 1. L'emplacement du dispositif 3 et de l'installation 1 peuvent être quelconques à partir du moment où l'un et l'autre sont susceptibles d'avoir chacun accès à une classique ligne téléphonique L1 ou L2 prévue pour le raccordement d'un poste téléphonique usuel au réseau téléphonique 2.

Ce réseau téléphonique 2 sera le plus souvent constitué par le réseau téléphonique à accès public desservant les lieux où seront pratiquement situés d'une part l'installation 1 et d'autre part, à distance, le dispositif 3.

Le dispositif 3 selon l'invention est par exemple un terminal télématique du type dit terminal d'annuaire tel que mentionné dans le munéro 1 de la revue "COMMUTATION et TRANSMISSION" parue en Mars 1984 à l'occasion d'un article intitulé "Terminaux professionnels d'information à usage personnel". La structure d'un tel terminal d'annuaire sera définie plus loin, il est ici représenté raccordé à une ligne téléphonique L1.

Le dispositif 3 selon l'invention peut également être un ordinateur, notamment de type personnel, doté de moyens pour se raccorder à une ligne téléphonique L1 comme un poste téléphonique et pour émuler un terminal d'annuaire. Il peut aussi éventuellement être un serveur du type de ceux auxquels sont susceptibles de se connecter de manière interactive les terminaux d'annuaire.

L'installation 1 distante se raccorde à une ligne téléphonique L2 pour les besoins de télécontrôle ; ce raccordement s'effectue via un répartiteur domotique 4 en série avec un second terminal d'annuaire 5 qui est connecté aux fils de la ligne téléphonique L2.

Le dispositif 3 et le terminal d'annuaire 5 sont bien entendu compatibles et éventuellement identiques ; seul le terminal 5 sera détaillé ci-dessous.

Ce terminal d'annuaire 5 est destiné à être associé de manière connue en soi à un équipement téléphonique 6 qui peut être suivant le cas soit un classique poste téléphonique externe soit son équivalent incorporé dans le terminal lui-même.

Cet équipement téléphonique 6 se raccorde, par l'intermédiaire d'une interface de ligne 7, aux bornes de connexion prévues sur le terminal d'annuaire 5 pour son raccordement à un ligne téléphonique, telle L2.

Le terminal d'annuaire 5 dispose classiquement d'un clavier alphanumérique 8 d'introduction de données et d'un dispositif d'affichage 9, de type écran, ce dernier permet de visualiser les informations qui sont transmises sous forme de données numériques par la ligne téléphonique L2 ou qui sont tabulées au clavier 8. Le clavier 8 et le dispositif d'affichage 9 sont contrôlés par une logique de gestion 10 classiquement organisée autour d'un microprocesseur et de son ensemble de mémoires. La logique de gestion 10 assure l'échange des informations sous forme de données numériques entre le clavier, le dispositif d'affichage et la ligne téléphonique. Elle est reliée à cet effet à cette dernière par un modem 11 qui est lui même raccordé aux bornes de connexion du terminal d'annuaire à la ligne téléphonique, en parallèle avec l'interface de ligne 7 et avec un détecteur d'appel téléphonique 12. Le détecteur d'appel téléphonique 12 est apte à reconnaître les signaux d'appel, dits de sonnerie, transmis par la ligne L2 à partir du réseau téléphonique et à en informer la logique de gestion 10, pour action éventuelle, en l'absence d'action de réponse par l'équipement téléphonique 6. Le décrochage du combiné de l'équipement téléphonique 6 par un utilisateur, suite aux signaux sonores produits par cet équipement téléphonique à réception des signaux de sonnerie, est bien entendu l'action de réponse la plus classique.

Un numéroteur d'appel 13 permet aux utilisateurs du terminal d'annuaire 5 de produire les signaux de numérotation nécessaires à l'établissement d'une communication notammant avec un autre dispositif télématique tel 3, au travers du réseau téléphonique 2 ; ce numéroteur d'appel 13 est placé sous le contrôle de la logique de gestion 10 et il est ici combiné avec le modem 11.

Le terminal d'annuaire 5 dispose également d'une interface 14 pour une prise péri-informatique destinée à transmettre vers un équipement périphérique non représenté, les informations, reçues par l'intermédiaire de la ligne téléphonique L2 ou produites par le clavier et/ou la logique de commande. Cette prise permet aussi l'envoi d'informations par l'équipement périphérique mentionné ci-dessus à destination de la logique de commande, du dispositif d'affichage 9 et/ou du dispositif télématique 3 distant via la ligne L2.

Selon l'invention on connecte une interface de transmission bidirectionnelle, dite à moyenne distance, en parallèle sur les bornes de connexion de la prise informatique ici référencées RX, TX, PT et SE, pour permettre l'échange d'informations sous forme de données numériques par l'intermédiaire de deux liaisons moyenne distance LA, LB, bifilaires et unidirectionnelles, exploitées en sens inverse. L'interface de transmission moyenne distance 15 est prévue, soit intégrée dans le terminal qui l'alimente directement, soit logée dans un boîtier extérieur que l'on connecte aux bornes de la prise péri-informatique, suivant la constitution des terminaux d'annuaire.

Une alimentation 16 complète le terminal d'annuaire. Elle est prévue pour supporter d'être maintenue constamment sous tension aux bornes d'un réseau d'alimentation alternatif. Elle est apte à fournir tant l'énergie électrique nécessaire au maintien du terminal à l'état de veille, affichage éteint, en l'absence prolongée d'échange d'informations, que le plein usage de ce terminal en période d'échange.

Selon l'invention on associe à l'installation 1 que l'on veut télécontrôler un équipement dit répartiteur domotique 4 que l'on connecte aux extrémités des liaisons unidirectionnelles LA, LB de l'interface de transmission moyenne distance 15 d'un terminal d'annuaire 5.

Le répartiteur domotique 4 est organisé autour d'une logique de commande 18 de même structure que la logique de gestion 10, il comporte donc un processeur de type microcontrôleur et des mémoires. Une interface de transmission 19, dite de répartiteur, qui est complémentaire de l'interface de transmission moyenne distance 15, permet les échanges d'informations entre le terminal d'annuaire 5 et la logique de commande 18, elle permet éventuellement une liaison bidirectionnelle avec une interface de transmission distante 19′.

La logique de commande 18 agit sur une interface émettrice 20 qui permet d'envoyer des informations et en particulier des commandes vers des organes divers non représentés ici de l'installation 1.

La logique de commande 18 est également reliée à une interface réceptrice 21 apte à recevoir des informations, notamment des relevés, provenant des organes de l'installation 1.

Une alimentation 22 raccordée au réseau de distribution électrique assure classiquement la fourniture d'énergie électrique, sous forme appropriée, aux composants du répartiteur domotique ; elle est ici secourue de manière temporaire et permet une sauvegarde partielle de la mémoire de la logique de commande.

Dans le cadre d'un exemple où l'installation 1 est relative à une habitation, le terminal d'annuaire 5 sera usuellement placé dans une des salles d'habitation, telle une salle de séjour, un bureau, alors que le répartiteur domotique 17 sera le plus souvent placé à un emplacement où seront centralisées les commandes et/ou les recueils d'information, par exemple au voisinage du répartiteur électrique de l'habitation et donc le plus souvent à distance du terminal d'annuaire 5. En effet le voisinage du répartiteur domotique et du répartiteur électrique est susceptible de faciliter la télécommande d'organes de l'installation par voie électrique.

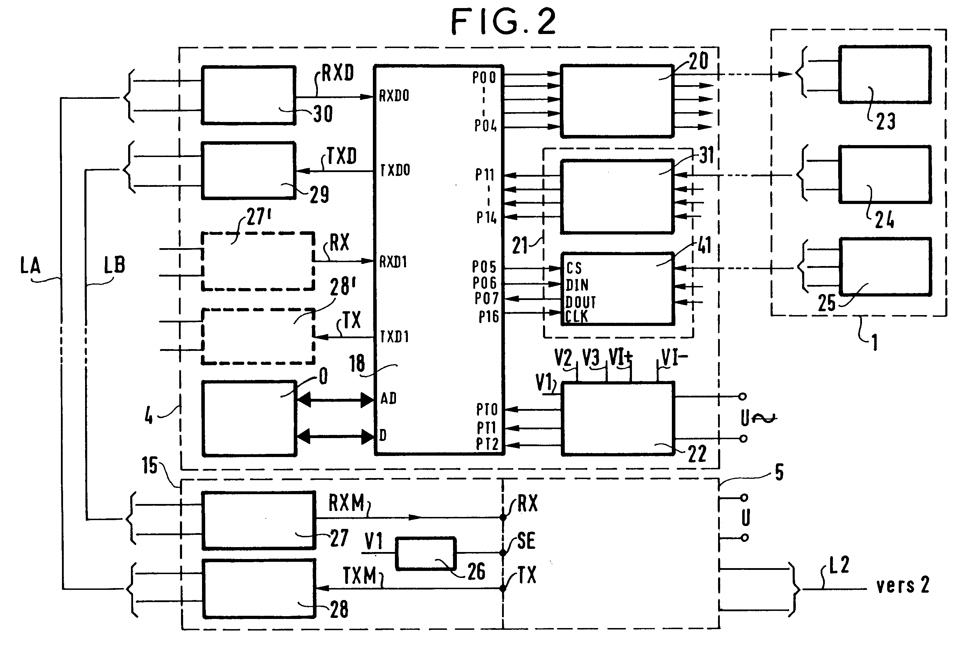

Un exemple de dispositif local 150 d'un agencement de télécontrôle pour une installation est présenté à la figure 2, il associe un terminal d'annuaire 5 et son interface de transmission moyenne distance 15 à un répartiteur domotique 4 desservant des organes 23, 24, 25 d'une installation 1.

Le terminal d'annuaire 5 est classiquement relié d'une part à une source de tension alternative U pour son alimentation en énergie et d'autre part aux deux fils d'une ligne téléphonique L2 le reliant au réseau téléphonique 2. L'interface de transmission 15 du terminal d'annuaire est relié à la borne émettrice TX et à la borne réceptrice RX de la prise péri-informatique, elle comporte un régulateur 26 qui la fournit en énergie à partir de la borne d'alimentation externe SE de cette prise péri-informatique. Deux modules, l'un d'émission 27 et l'autre de réception 28, forment les éléments essentiels de l'interface de transmission du terminal d'annuaire, ils sont respectivement connectés le premier à la borne TX et l'autre à la borne RX de la prise péri-informatique, chacun d'eux est relié à un module complémentaire 29 ou 30 de l'interface de transmission 19 que contient le répartiteur domotique 4, via l'une des liaisons LA, LB.

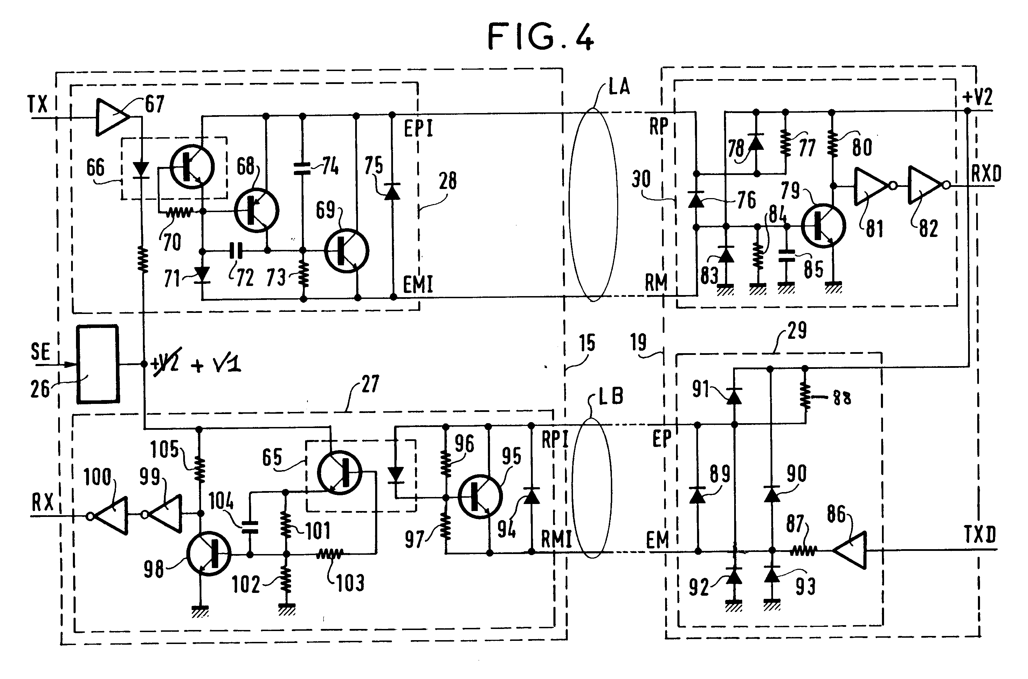

Des exemples de modules 27, 28, 29, 30 sont développés plus loin en liaison avec la figure 4.

La logique de commande 18 est par exemple organisée autour d'un microcontrôleur usuel, tel le modèle 70320 ou V25 de la société NEC. Le module d'émission 29 et le module de réception 30 sont par exemple respectivement reliés l'un à la borne TXDO et l'autre à la borne RXDO d'une des deux liaisons bidirectionnelles de type série dont dispose ce microcontrôleur.

Un ensemble de mémoires O est classiquement associé à la logique de commande 18, il comporte classiquement une mémoire morte, ainsi qu'une mémoire vive dont au moins un élément est sauvegardé par pile ou accus pour une très longue durée, cet élément recevant notamment les données relatives à la configuration réelle du répartiteur domotique qui le comporte. L'ensemble de mémoires O communique classiquement avec le microcontrôleur de la logique de commande par l'intermédiaire d'un bus d'adresse et d'un bus de données.

La logique de commande 18 assure l'envoi d'informations vers les organes de l'installation et la réception d'informations en provenance de ces organes par l'intermédiaire d'un certain nombre de ports d'entrée/sortie.

L'envoi d'informations vers les organes ou vers le terminal d'annuaire 5 s'effectue à l'initiative de la logique de commande en fonction du programme d'exploitation défini pour elle que contiennent ses mémoires. Des demandes d'information sont susceptibles d'être initiées par le dispositif 3 et répercutées via le réseau téléphonique 2 et le terminal d'annuaire 5, elles sont prises en compte par la logique de commande 18 au niveau du répartiteur domotique et c'est cette même logique qui commande les opérations en découlant.

Dans l'exemple de réalisation proposé la logique de commande 18 est apte à assurer des commandes d'organes 23 par l'intermédiaire de signaux de type binaire que produit l'interface émettrice d'ordres 20. A cette effet cette dernière est reliée d'une part à des ports de sortie, ici POO à P04, de la logique de commande 18 et d'autre part aux entrées de commande d'organes 23, par exemple de type relais, dont une seul est ici figuré.

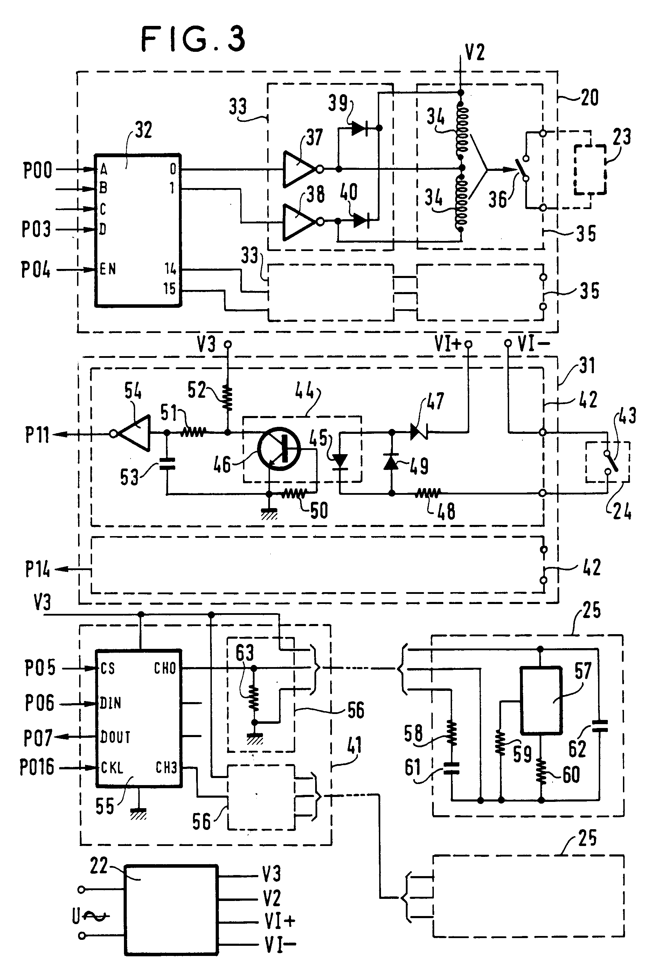

Un exemple d'interface émettrice 20 est présenté figure 3, y figure un décodeur 32 à quatre entrées et seize sorties qui est d'une part rendu actif par le port P04 de la logique de commande 18 et d'autre part adressé par les ports POO à P03 de cette même logique. Les sorties du décodeur 32 activées par paire accèdent par l'intermédiaire d'interfaces de puissance 33 aux bornes des bobines de commande 34 de relais bistables 35 agissant chacun par au moins un contact 36 sur l'alimentation d'organes 23, qui sont par exemple des contacts de mise en marche d'un moteur, d'une électrovanne etc...

Un interface de puissance 33 associe par exemple selon un montage connu montré en figure 3 deux amplificateurs inverseurs 37, 38 et deux diodes 39, 40 pour contrôler les deux bobines en série d'un relais 35 alimenté par une tension V2 que fournit l'alimentation 22 du répartiteur domotique 4 - figure 3 - .

Comme on l'on vu, la logique de contrôle 18 est aussi agencée et programmée pour recevoir des informations d'état de type analogique et/ou tout ou rien fournies par des organes 24, 25 de l'installation 1, tels des capteurs analogiques, des détecteurs de seuil. Elle est reliée à cet effet à une interface réceptrice d'informations périphériques 21, qui est constitués d'une unité réceptrice numérique 31 et d'une une unité réceptrice analogique 41, respectivement montrées reliées l'une a un organe 24, l'autre à un organe 25 sur la figure 2.

L'unité réceptrice numérique 31 présentée figures 2 et 3 est reliée à quatre ports d'entrée P11 à P14 de la logique de commande 18, elle dessert quatre organes capteurs 24 reliés à elle, chacun par l'intermédiaire d'un coupleur de réception 42. Chaque organe capteur 24 fournit une information de type tout ou rien par exemple par l'intermédiaire d'un contact 43 qui est parcouru par un courant issu de l'alimentation 22, via des bornes VI+, VI- lorsque le contact 43 est fermé. Le coupleur de réception 42 est par exemple doté d'un photocoupleur 44 dont l'élément émetteur de lumière 45 est en série avec le contact 43 de manière que son élément récepteur de lumière 46 agisse en conséquence sur le port d' entrée correspondant, soit P11 sur la figure 3.

Une diode Zener 47 et une résistance 48 sont montées en série avec la diode électroluminescente qui constitue l'élément émetteur de lumière 44, une diode 49 en parallèle avec cette diode électroluminescente assure sa protection et celle du circuit en amont en cas de surintensité et/ou de surtension au niveau de l'installation 1.

Le transistor, qui constitue l'élément récepteur de lumière du photocoupleur 46, est lui même alimenté entre la masse et une borne V3 de l'alimentation 22 par un circuit classique associant trois résistance 50, 51, 52 et un condensateur 53 et attaquant un amplificateur inverseur 54 dont la sortie est raccordée au port P11.

L'unité réceptrice analogique 41 est destinée à desservir des capteurs analogiques 25, tels qu'un capteur de température ou un capteur d'humidité, par exemple pour la télécommande du chauffage d'une installation.

Cette unité est ici reliée à trois ports d'entrée PO5, P06, PO16 et un port de sortie P07 de la logique de commande 18, elle comporte un comparateur 55 à entrées multiples, tel qu'un circuit du modèle ADC 0854 de la société NATIONAL SEMICONDUCTORS ; ce circuit permet de comparer un échantillonnage du signal fourni par l'un ou l'autre de quatre capteurs 25, via autant d'adaptateurs 56, à une référence correspondante fournie par la logique de commande via le port P06 agissant sur l'entrée série de données DIN du comparateur.

Ce dernier fournit un compte-rendu de comparaison via sa sortie DOUT pour chaque échantillon au rythme d'un signal d'horloge fourni par la logique de commande 18 sur l'entrée CKL.

Un exemple de capteur de température est présenté figure 3. Il comporte ici une classique sonde 57 composée d'un circuit LM35 de la société NATIONAL SEMICONDUCTORS auquel on associe dans un montage classique trois résistances 58, 59, 60 et deux condensateurs 61, 62. La sonde est placée à un endroit approprié et elle est reliée par une paire torsadée blindée aux bornes d'une résistance 63 de l'adaptateur 56 ; la tension apparaissant aux bornes de cette résistance, dont l'une des bornes est reliée au potentiel de masse, est appliquée par l'autre borne à une entrée de comparaison CHO du comparateur 55, lorsque la sonde est alimentée à partir d'un potentiel V3 par l'alimentation 22.

Les tensions VI+, VI-, V2, V3 sont fournies par l'alimentation 22 du répartiteur domotique à partir de la tension alternative d'alimentation U de l'installation 1.

Cette alimentation 22 est préférablement secourue et incorpore au moins une pile, non représentée, pour la conservation des données de configuration de l'installation qui sont contenues en mémoire vive de logique de commande 18, de manière à permettre d'une part au moins l'alimentation des capteurs par l'alimentation secourue en l'absence temporaire de tension alternative U fournie par le réseau de distribution d'énergie desservant l'installation, d'autre part une conservation à longue échéance des données de configuration en cas de coupure prolongée, volontaire ou non de cette tension alternative U. L'alimentation 22 est ici reliée à des ports d'entrée PTO, PTI, PT2 de la logique de commande 18 pour fournir des informations sur son état de fonctionnement.

Selon une variante de répartiteur domotique 4 selon l'invention et en particulier avec le microcontrôleur envisagé pour sa logique de commande 18, il existe deux entrées RXDO, RXD1 et deux sorties TXDO, TXD1 permettant l'exploitation simultanée de deux liaisons séries comportant chacune une liaison unidirectionnelle d'émission TX ou TXD et une liaison unidirectionnelle de réception RX ou RXD.

Il est ainsi possible de relier le répartiteur domotique 18 par son interface de transmission 19, d'une part à un terminal d'annuaire, d'autre part à un dispositif distant doté d'un interface de transmission complémentaire 19′, par exemple à un autre répartiteur domotique situé lui aussi à moyenne distance par exemple dans un rayon de cent mètres.

L'interface de transmission 19 est donc composée d'une ou de deux unités d'émission-réception suivant le raccordement du répartiteur domotique 4.

Dans l'exemple de réalisation proposé, les interfaces de transmission 15 et 19, ainsi que l'interface de transmission complémentaire 19′ d'un éventuel dispositif distant sont constituées chacune d'un module d'émission et d'un module de réception, deux modules d'émission 28, 29 différents et deux modules de réception 27, 30 différents étant susceptibles d'être mis en oeuvre.

Dans l'exemple de réalisation proposé l'interface de transmission 15 affectée au terminal d'annuaire 5, comporte un module de réception 27 et un module d'émission 28, dits isolés conçus pour interdire toute continuité électrique directe entre le terminal d'annuaire 5 et les modules complémentaires 29 et 30, dits non isolés du répartiteur domotique 4 via les fils des liaisons LA, LB qui les relient.

Les modules isolés 27 et 28 de l'interface de transmission 15 du terminal d'annuaire sont organisés chacun autour d'un photocoupleur d'isolement 65 ou 66.

La diode électroluminescente du photocoupleur 66 du module d'émission isolé 28 est classiquement insérée entre la borne d'émission TX de la prise péri-informatique, via un amplificateur non inverseur 67, et la borne positive d'alimentation +V1 du régulateur 26, de manière à être activée ou non en fonction du signal binaire apparaissant sur la borne d'émission TX.

Le transistor de réception de type NPN du photocoupleur 66 attaque un montage amplificateur associant un transistor 68 de type PNP et un transistor 69 de type NPN en cascade entre les bornes EPI et EMI auxquelles viennent se relier les deux fils de la liaison LA. A cet effet l'émetteur du transistor 68, les collecteurs du transistor de réception du photocoupleur 66 et du transistor 66 sont reliés à un potentiel +V2 appliqué par l'alimentation 22 du répartiteur domotique 4 via le fil de la liaison LA qui relie une borne RP du module 30 du répartiteur domotique à la borne EPI de l'interface de transmission 15 du terminal d'annuaire 5. L'émetteur du transistor 69 est de même susceptible d'être relié à la masse de l'alimentation 22 via le second fil de la liaison LA qui relié une borne RM du module 30 du répartiteur domotique à la borne EMI de l'interface de transmission 15.

Une résistance 70 relie classiquement la base du transistor du photocoupleur 66 à son émetteur et à la base du transistor 68, cette dernière est reliée par une diode 71 à la borne EMI et par un condensateur 72 à la base du transistor 69, classiquement reliée elle même via une résistance 73, à la borne EMI et, via un condensateur 74, à la borne EPI.

Une diode 75 protège le module 28 contre les éventuelles surtensions impliquant la liaison LA.

Une diode 76 insérée entre les bornes RM et RP du module 30 protège ce dernier de la même manière que la diode 75 pour le module 28. La cathode de la diode 76 est reliée à la borne RP du module 30 et au potentiel positif +V2 via une résistance 77 en parallèle avec une diode de protection 78.

L'anode de la diode 76 est reliée à la borne RM et à la base d'un transistor 79 de type NPN recevant les signaux émis par le module 28. Ce transistor 79, connecté par son émetteur à la masse et par son collecteur au potentiel positif +V2 via une résistance 80, transmet les signaux reçus à la logique de commande, via le port RXDO, la liaison RXD et deux amplificateurs inverseurs 81, 82. Une diode 83, une résistance 84 et un condensateur 85 en parallèle entre la masse et la base du transistor 79 complètent classiquement le montage.

En sens inverse, le module non isolé d'émission 29 du répartiteur domotique alimente en boucle la diode électroluminescente du photocoupleur 65 de l'interface de transmission 15 du terminal d'annuaire 5 au rythme imposé par la logique de commande 18, via son port TXDO, la liaison TXD, un amplificateur non inverseur 86 et une résistance de limitation 87 aboutissant à une borne EM de la liaison LB. L'autre borne EP de cette liaison LB, au niveau du module 29, est classiquement reliée via une résistance 88 au potentiel +V2 fourni par l'alimentation 22. Un ensemble de cinq diodes 89 à 93 assure la protection du module 29 contre les surtensions.

Une diode 94 est placée entre les bornes RPI et RMI du module isolé de réception 27, en parallèle avec la diode 89 connecté entre les bornes EP et EM du module non isolé d'émission 29 pour la raison évoquée ci-dessus.

Un transistor 95 de type NPN et deux résistances 96 et 97 complètent le montage d'entrée au niveau du module 27. Le collecteur et l'émetteur du transistor 95 sont respectivement reliés l'un à la borne RPI l'autre à la borne RMI, la base de ce transistor est relié d'une part à la borne médiane du pont diviseur que forme les résistances 96 et 97, entre les bornes RPI et RMI et d'autre part à la cathode de la diode électroluminescente du photocoupleur 65, cette diode étant en parallèle avec la résistance 96.

Le transistor de type NPN du photocoupleur 65 attaque la borne RX de la prise péri-informatique via un transistor 98 et deux inverseurs 99, 100 en série. L'alimentation du transistor 65 s'effectue entre le potentiel +V1, fourni par le régulateur 26 de l'interface de transmission 15, pour le terminal d'annuaire, et la masse.

La base du transistor du photocoupleur 65 est reliée à un pont diviseur à résistances 101, 102 par une résistance 103. Le point commun aux trois résistances 101 à 103 est relié à la base du transistor 98 de même qu'une des bornes d'un condensateur 104 reliant cette base au point commun à la résistance 101 et à l'émetteur du transistor du photocoupleur 65.

L'association d'un module isolé d'émission avec un module non isolé de réception et/ou celle d'un module non isolé d'émission avec un module isolé de réception permet d'éviter toute transmission intempestive de surtension entre modules raccordés.

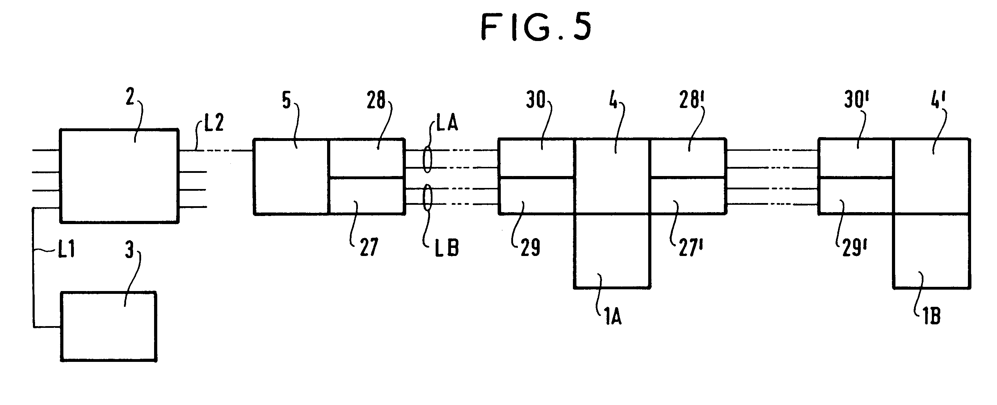

Ceci permet également de relier en chaîne plusieurs répartiteurs domotiques à un même terminal d'annuaire comme le montre la figure 5.

A cet effet on relie le répartiteur domotique 4 d'une installation ou partie d'installation 1A à un terminal d'annuaire 5 en reliant les modules isolés de réception 27 et d'émission 28 de l'interface de transmission du terminal d'annuaire respectivement l'un au module non isolé d'émission 29, l'autre au module non isolé de réception 30 du répartiteur domotique 4, ce qui permet les échanges d'information entre ce dernier et un dispositif 3 via le réseau téléphonique 2 auquel le terminal d'annuaire 5 est supposé raccordé. Si le répartiteur domotique 4 est équipé de plus d'un module isolé de réception 27′ et d'émission 28′ il peut servir à relier un second répartiteur domotique 4′ disposant de modules non isolés d'émission 29' et de réception 30′, la logique de commande 18 du répartiteur domotique 4 étant alors programmée à cet effet d'une manière connue en soi qui ne sera pas précisée ici.

Le répartiteur domotique 4′ peut desservir des dépendances 1B de l'installation 1A qui dessert le répartiteur 4 en particulier si ces dépendances sont au-delà de la distance possible entre organes d'une installation et répartiteur domotique et en deçà de celle possible entre modules complémentaires 27-29 et 28-30.

Le répartiteur domotique 4′ peut également desservir une installation 1B différente de l'installation 1A le terminal d'annuaire 5 appartenant par exemple aux parties communément exploitées par les utilisateurs des deux installations.

Sachant qu'il est en fait possible de placer en série, comme indiqué ci-dessus, plusieurs répartiteurs domotiques reliés en succession à un même terminal d'annuaire 5 on peut par exemple envisager de desservir des habitations d'un même ensemble par des répartiteurs domotiques individuels reliés en série à un terminal d'annuaire localisé dans une des parties communes de l'ensemble d'habitation.

Il est également possible de relier le répartiteur domotique 4 d'une installation à un autre dispositif télématique spécialisé par exemple de télésurveillance par l'intermédiaire d'une paire de modules d'émission et de réception soit directement, soit via une chaîne d'autres répartiteurs domotiques à l'autre extrémité de la suite par rapport au terminal d'annuaire 5.

D'une manière générale, le répartiteur domotique 4 d'une installation est programmé à la demande de l'usager responsable, le plus souvent par l'installateur ou éventuellement par téléchargement sous le contrôle d'un serveur spécialisé distant et via le réseau téléphonique 2 et le terminal d'annuaire 5.

L'établissement d'une communication entre répartiteur domotique 4 et un dispositif télématique 3 distant via le réseau téléphonique et le terminal d'annuaire 5 est susceptible de s'effectuer indifféremment par l'intermédiaire du dispositif télématique 3, du répartiteur domotique 4 ou éventuellement de l'équipement téléphonique 6 associé ou incorporé au terminal d'annuaire 5. Cet établissement s'effectue soit sous l'action d'un usager, soit automatiquement selon un programme prédéterminé déroulé dans le dispositif télématique ou dans le répartiteur domotique sous le contrôle de la logique de gestion ou de commande correspondante. Il implique une phase correspondant au décrochage d'un combiné, une écoute pour détection de tonalité d'invitation à numéroter ou de tonalité d'occupation, l'envoi de la numérotation correspondant au numéro d'abonné téléphonique appelé, la détection de porteuse, l'invitation à transmettre correspondant à la présence d'un dispositif 3 apte à transmettre des données ou du terminal d'annuaire après réponse correspondant au décrochage de combiné au niveau du dispositif ou terminal appelé.

L'échange des données s'effectue alors entre le terminal d'annuaire 5 et le dispositif 3 selon la procédure connue avec les terminaux d'annuaire.

En fin de communication, la logique de commande du répartiteur domotique et/ou une logique de gestion du dispositif 3 assurent les opérations correspondant à un raccrochage de combiné au niveau d'un poste téléphonique usuel, afin de libérer la liaison téléphonique temporairement établie au travers du réseau téléphonique 2.

## Revendications

1. Agencement de télécontrôle, par voie téléphonique pour au moins un appareillage (23, 24, 25) d'une installation (1) dotée à cet effet d'un équipement (4) qui est organisé autour d'une logique de commande (18) à microprocesseur pour la commande du ou des appareillages, le télécontrôle s'effectuant entre le dit équipement (4) et un dispositif télématique (3) distant par l'intermédiaire de lignes L1 et L2 d'un réseau téléphonique (2) après établissement d'une communication téléphonique depuis l'équipement ou depuis le dispositif, ledit agencement étant caractérisé en ce que équipement (4) Situé au niveau de l'installation est de type répartiteur domotique et est relié à la ligne téléphonique (L2) qui le dessert dans l'installation, par l'intermédiaire d'un terminal d'annuaire (5), du type connu à détecteur (12) et numéroteur (13) automatiques d'appel téléphonique, pour ses mises en communication téléphonique avec le dispositif télématique (3), ce dispositif (3) étaut compatible avec le terminal d'annuaire (5) choisi.

2. Agencement de télécontrôle, selon la revendication 1, caractérisé en ce que l'équipement répartiteur domotique et le terminal d'annuaire (5) associe sont de plus respectivement équipés chacun d'une interface de transmission (19 ou 15) permettant leur raccordement mutuel à distance, l'interface de transmission (15) du terminal d'annuaire étant raccordée aux bornes d'une prise péri-informatique (14) que comporte ce terminal (5) et incorporant un module d'émission (27) et un module de réception (28) amplificateurs qui isolent électriquement ce terminal de l'équipement répartiteur domotique.

3. Agencement de télécontrôle, selon la revendication 2, caractérisé en ce que l'interface de transmission (15) du terminal d'annuaire (5), qui est destinée à relier ce terminal à l'équipement répartiteur domotique (4), est contenue dans un boîtier indépendant qui est connectable à la prise péri-informatique (14) du terminal.

4. Agencement de télécontrôle selon la revendication 1, caractérisé en ce que l'interface de transmission (19) comporte deux modules d'émission (28', 29) et deux modules de réception (27', 30) intérieurement raccordés à des ports séries (TXD1, TXDO, RXD1, RXDO) de la logique de commande (18), de manière à permettre le raccordement d'une interface de transmission distante (19') au terminal d'annuaire (5) les informations transmises entre cette interface et ce terminal transitant par la logique de commande (18) du répartiteur domotique.

5. Agencement de télécontrôle selon la revendication 4, caractérisé en ce que d'une part les deux modules d'émission (28', 29), d'autre part les deux modules de réception (27', 30) du répartiteur domotique sont complémentaires, l'un au moins des deux assurant une discontinuité électrique entre la liaison auquel il est relié (LA ou LB) et le répartiteur qui le comporte.

6. Agencement de télécontrôle selon la revendication 5, caractérisé en ce qu'il comporte au moins deux répartiteurs domotiques (4, 4') raccordés en série à un même terminal d' annuaire (5) par leurs modules d'émission et de réception respectifs.

7. Agencement de télécontrôle selon l'une des revendications 5 ou 6, caractérisé en ce que le répartiteur domotique (4) ou les répartiteurs domotiques (4, 4') en chaîne qu'il comporte sont reliés d'une part à un terminal d'annuaire (5) à un bout de la chaîne qu'ils forment, d'autre part à un autre dispositif télématique par l'autre bout de chaîne.

8. Agencement de télécontrôle selon la revendication 1, caractérisé en ce que le répartiteur domotique (4) comporte une alimentation (22) en énergie électrique, à partir du réseau alternatif, qui est de type secourue.

9. Agencement de télécontrôle selon au moins l'une des revendications 1 et 8 caractérisé en ce que le répartiteur domotique (4) comporte au moins un élément de mémoire vive sauvegardé pour les données de configuration du répartiteur.

10. Agencement de télécontrôle selon la revendication 1 , caractérisé en ce qu'un répartiteur domotique comporte au moins une interface émettrice (20) apte à envoyer des commandes sous forme numérique à des organes (23) de l'installation et au moins une interface réceptrice (21) apte à réceptionner les informations provenant sous forme analogique et/ou numérique d'organes (24, 25) de l'installation (1), les dites interfaces (20, 21) étant reliées à des ports de la logique de commande (18) pour leur contrôle.

## Claims

1. A telemonitoring system for remotely monitoring telephonically at least one apparatus (23, 24, 25) of an installation (1), being provided for this purpose with an equipment (4) organized about a control logic (18) and fitted with a microprocessor for controlling one or more apparatus, with the remote monitoring being performed between said equipment (4) and a distant telematics device (3) via the lines (L1, L2) of a telephone network (2) after having established a telephonic communication from the equipment or from the device, said system being characterized in that the equipment (4) placed local to the installation is of the premises distributor type and is connected to the telephone line (L2) which serves it in the installation via a directory terminal (5) of the known automatic telephone call type of a detector (12) and a dialler (13), for establishing its calls with the telematics device (3), said device (3) being compatible with the chosen directory terminal.

2. A remote monitoring system according to claim 1, characterized in that the premises distributor equipment (4) and the associated directory terminal (5) are further provided each with a respective transmission interface (19 or 15) allowing for their mutual remote interconnection, with the transmission interface (15) of the directory terminal being connected to the terminals of a periphery connector (14) included in said terminal (5) and including a respectively amplifying transmit module (27) and a receive module (28), which isolate electrically the directory terminal and the premises distributor.

3. A remote monitoring system according to claim 2, characterized in that the transmission interface (15) of the directory terminal (5) intended for connecting said terminals to a premises distributor, is itself contained in an independent housing connectable to the periphery connector (14) of the terminal.

4. A remote monitoring system according to claim 1, characterized in that the transmission interface (19) comprises two transmit modules (28', 29) and two receive modules (27', 30) internally connected to serial ports (TXD1, TXDO, RXD1, RXDO) of the control logic (18) in such a manner as to enable a transmission interface (19') distant from the directory terminal (5) to be connected, with data transmitted between said distant interface and said terminal transmitting via the control logic (18) of the premises distributor.

5. A remote monitoring system according to claim 4, characterized in that firstly the two transmit modules (28', 29) and secondly the two receive modules (27', 30) of the premises distributor are complementary, with at least one module of the two ones ensuring electrical isolation between the link to which it is connected (LA or LB) and the distributor in which it is included.

6. A remote monitoring system according to claim 5, characterized in that it includes at least two premises distributors (4, 4') connected in series to a common directory terminal (5) via their respective transmit and receive modules.

7. A remote monitoring system according to claim 5 or 6, characterized in that the premises distributor (4) or the premises distributors (4, 4') connected in series in the system are connected firstly to a directory terminal (5) at one end of the chain formed thereby, and secondly to a different terminal device and the other end of said chain.

8. A remote monitoring system according to claim 1, characterized in that a premises distributor (4) includes an electrical power supply (22) taking power from the A.C. mains, said power supply being of the backed-up type.

9. A remote monitoring system according to any of claims 1 and 8, characterized in that a premises distributor (4) includes at least one portion of backed-up working memory for storing configuration data for the distributor.

10. A remote monitoring system according to claim 1, characterized in that a premises distributor includes at least one send interface (20) suitable for transmitting commands in digital form to actuators (23) of the installation, and at least one receive interface (21) suitable for receiving information in analog form and/or in digital form from actuators (24, 25) of the installation (1), said interfaces (20, 21) being connected to ports of the control logic (18) for control purposes.

## Patentansprüche

1. System zur Fernsteuerung mindestens eines Apparates (23, 24, 25) einer Anlage (1) mittels Telefonverbindungen, mit einer Einrichtung (4), die eine Steuerlogik (18) mit Mikroprozessor zur Steuerung des oder der Apparate aufweist, wobei die Fernüberwachung zwischen der Einrichtung (4) und einem entfernt angeordneten Telematikgerät (3) über Leitungen (L1, L2) eines Telefonnetzes (2) nach Herstellen einer von der Einrichtung oder dem Gerät ausgehenden Telefonverbindung erfolgt, dadurch gekennzeichnet, daß die im Bereich der Anlage befindliche Einrichtung (4) ein Hausverteiler ist und an die Telefonleitung (L2) angeschlossen ist, die ihn in der Anlage zur Herstellung seiner telefonischen Verbindung mit dem Telematikgerät (3) über ein Directory-Endgerät (5) bekannter Bauart mit automatischem Melder (12) und automatischem Nummernwähler (13) für Telefonanrufe bedient, wobei das Telematikgerät (3) mit dem gewählten Directory-Endgerät (5) kompatibel ist.

2. Fernsteuersystem nach Anspruch 1, dadurch gekennzeichnet, daß die Hausverteilereinrichtung und das zugehörige Directory-Endgerät (5) weiter je mit einer Übertragungsschnittstelle (19 oder 15) ausgerüstet sind, die ihr gegenseitiges Fernverbinden ermöglichen, wobei die Übertragungsschnittstelle (15) des Directory-Endgerätes mit den Klemmen eines Peripherieanschlusses (14) verbunden ist, den dieses Endgerät (5) enthält, und einen Sendemodul (27) und einen Empfangsmodul (28) enthält, die dieses Endgerät elektrisch von der Hausverteilereinrichtung isolieren.

3. Fernsteuersystem nach Anspruch 2, dadurch gekennzeichnet, daß die Übertragungsschnittstelle (15) des Directory-Endgerätes (5), die zum Verbinden dieses Endgerätes mit der Hausverteilereinrichtung (4) dient, in einem eigenen Gehäuse enthalten ist, das an den Peripherieanschluß (14) des Endgerätes anschließbar ist.

4. Fernsteuersystem nach Anspruch 1, dadurch gekennzeichnet, daß die Übertragungsschnittstelle (19) zwei Sendemodule (28', 29) und zwei Empfangsmodule (27',30) aufweist, die intern an Serienports (TXD1, TXDO, RXD1, RXDO) der Steuerlogik (18) angeschlossen sind, derart, daß das Anschließen einer entfernten Übertragungsschnittstelle (19) an das Directory-Endgerät (5) ermöglicht wird, wobei die Daten zwischen dieser Schnittstelle und dem Endgerät über die Steuerlogik (18) des Hausverteilers laufen.

5. Fernsteuersystem nach Anspruch 4, dadurch gekennzeichnet, daß beim Hausverteiler die beiden Sendemodule (28', 29) einerseits und die beiden Empfangsmodule (27', 30) andererseits einander komplementär sind, wobei mindestens einer von beiden Modulen eine elektrische Unterbrechung zwischen der Verbindung, an die er angeschlossen ist (LA oder LB), und dem Verteiler, der ihn enthält, bewirkt.

6. Fernsteuersystem nach Anspruch 5, dadurch gekennzeichnet, daß es mindestens zwei Hausverteiler (4, 4') aufweist, die durch ihre Sende- bzw. Empfangsmoduln in Reihe an ein gemeinsames Directory-Endgerät (5) angeschlossen sind.

7. Fernsteuersystem nach Anspruch 5 oder 6, dadurch gekennzeichnet, daß der Hausverteiler (4) oder die in Kette geschalteten Hausverteiler (4, 4') einerseits an ein Directory-Endgerät (5) mit dem einen Ende der von ihnen gebildeten Kette und andererseits mit dem anderen Ende der Kette an ein weiteres Telematikgerät angeschlossen sind.

8. Fernsteuersystem nach Anspruch 1, dadurch gekennzeichnet, daß der Hausverteiler (4) eine gegen Netzausfall geschützte Versorgungseinheit (22) zur Lieferung elektrischer Energie aus dem Wechselstromnetz umfaßt.

9. Fernsteuersystem nach mindestens einem der Ansprüche 1 und 8, dadurch gekennzeichnet, daß der Hausverteiler (4) mindestens ein gegen Netzausfall geschütztes Arbeitsspeicherelement für die Konfigurationsdaten des Verteilers aufweist.

10. Fernsteuersystem nach Anspruch 1, dadurch gekennzeichnet, daß ein Hausverteiler mindestens eine Sendeschnittstelle (20) zum Übermitteln von Steuerbefehlen in Digitalform an die Organe (23) der Anlage, und mindestens eine Empfangsschnittstelle (21) zum Empfang der in Analog- und/oder Digitalform von den Organen (24, 25) der Anlage (1) gelieferten Informationen aufweist, wobei die Schnittstellen (20, 21) zu ihrer Steuerung an Ports der Steuerlogik (18) angeschlossen sind.
